Europäisches Patentamt

European Patent Office

Office européen des brevets

(11) Numéro de publication : **0 648 030 A1**

## (12) DEMANDE DE BREVET EUROPEEN

(21) Numéro de dépôt : **94402029.6**

(22) Date de dépôt : **12.09.94**

(51) Int. Cl.⁶ : **H04J 3/16**

(30) Priorité : **11.10.93 FR 9312161**

(43) Date de publication de la demande :
**12.04.95 Bulletin 95/15**

(84) Etats contractants désignés :
**BE DE ES GB IT LU NL**

(71) Demandeur : **SAT (Société Anonyme de Télécommunications)**
**6, avenue d'léna**
**F-75116 Paris (FR)**

(72) Inventeur : **Bonnard, René**
**58 B. rue du Dessous des Berges**
**F-75625 PAris Cedex 13 (FR)**

(74) Mandataire : **Martinet & Lapoux**
**BP 405**
**F-78055 St. Quentin en Yvelines Cédex (FR)**

(54) **Multiplexeur de voies munériques.**

(57) Un multiplexeur de voies numériques, destiné à être intégré dans un réseau de transmission, comprend plus de deux moyens d'accès ($CA_m$) interconnectés par un moyen de liaison (B) pour multiplexer et démultiplexer des voies numériques. Il est caractérisé en ce que le moyen de liaison est un bus comprenant un ensemble ($B_2$) de fils de transmission de données ($F_m$) à chacun desquels sont reliés en émetteur un seul moyen d'accès ($CA_m$) et en récepteur tous les autres moyens d'accès. La robustesse aux défaillances de ce multiplexeur est améliorée.

FIG.2

La présente invention concerne d'une manière générale le multiplexage et le démultiplexage par répartition dans le temps de voies numériques et plus particulièrement un équipement multiplexeur-démultiplexeur destiné à être intégré dans un réseau de transmission public ou privé pour distribuer des voies téléphoniques et des données. Pour simplifier, un tel équipement sera appelé "multiplexeur" dans la suite.

Un multiplexeur selon la technique antérieure présente des accès entrants et sortants qui peuvent être classés en des accès affluents, généralement à bas débit et relativement nombreux, par exemple quelques dizaines, et des accès résultants de débit plus élevé et en moins grand nombre. Le multiplexeur a pour fonction de multiplexer temporellement les données des accès affluents pour les transmettre aux accès résultants, et inversement de démultiplexer les données des accès résultants pour les distribuer aux accès affluents.

En outre, le multiplexeur peut avoir une fonction de brassage entre tous les accès. Dans ce cas, tous les accès sont interconnectables, c'est-à-dire les connexions sont réalisables entre les affluents, entre les accès affluents et les accès résultants, et entre les accès résultants.

Le multiplexeur a une architecture en étoile. Outre des moyens d'alimentation électrique, de base de temps et de contrôle d'exploitation, il comprend un moyen central de connexion assurant des fonctions de multiplexage et/ou de brassage et relié par des liaisons point à point à une pluralité de moyens d'accès, auxquels sont connectés les accès affluents et résultants. Le moyen central de connexion et les moyens d'accès sont généralement réalisés sous la forme de cartes électroniques.

Le flux de données, composé de données proprement dites et/ou de parole numérisée, entrant par un accès dans le multiplexeur est tout d'abord mis en forme par le moyen d'accès puis transmis par la liaison point à point au moyen central de connexion. Ce dernier multiplexe et/ou brasse les données et les retransmet par les liaisons point à point aux moyens d'accès destinataires des données qui à leur tour les transmettent en sortie par leurs accès respectifs. Le moyen de connexion, qui est au centre de l'étoile, occupe physiquement un emplacement déterminé, non interchangeable avec les autres moyens.

Le multiplexeur est sécurisé pour ne pas bloquer tout le trafic en cas de défaillance. Si un moyen d'accès est défaillant, les liaisons traversant ce moyen sont perturbées, tandis que les liaisons inaccessibles par ce circuit d'accès, c'est-à-dire traversant d'autres moyens d'accès du multiplexeur, fonctionnent normalement. En revanche, si un défaut de fonctionnement apparait dans le moyen central de connexion, toutes les liaisons sont perturbées. Le multiplexeur n'est donc pas robuste à une défaillance du moyen central de connexion et doit en conséquence être sécurisé en doublant le moyen central de connexion avec un second moyen identique, également relié par des liaisons point à point à tous les moyens d'accès. En conséquence, le nombre de liaisons point à point nécessaires est 2 x M, si M est le nombre de moyens d'accès du multiplexeur.

La présente invention vise à fournir un multiplexeur de voies numériques dont la robustesse aux défaillances est améliorée, et ne nécessite pas le doublement d'un moyen central de connexion assurant le multiplexage et/ou le brassage de données.

A cette fin, un multiplexeur de voies numériques comprenant plus de deux moyens d'accès interconnectés par un moyen de liaison pour multiplexer et démultiplexer des voies numériques est caractérisé en ce que le moyen de liaison est un bus comprenant un ensemble de fils de transmission de données à chacun desquels sont reliés en émetteur un seul moyen d'accès et en récepteur tous les autres moyens d'accès. En variante, à chacun des fils de transmission de données est également relié en récepteur ledit seul moyen d'accès relié en émetteur. Ainsi, si un moyen d'accès est défaillant, seules les communications traversant ce moyen sont perturbées et les communications traversant les autres moyens d'accès ne sont pas perturbées. Le bus est par conséquent un bus robuste aux défaillances.

Une position de fil de transmission dans le bus est associée à chaque moyen d'accès, ledit chaque moyen d'accès étant relié en émetteur à un fil à la position associée, et l'ensemble des fils de transmission de données du bus est permuté spatialement d'un fil entre deux moyens d'accès contigus et chaque fil de transmission de données est à la position associée en regard d'un moyen d'accès respectif. Tous les emplacements de moyens d'accès dans le multiplexeur sont identiques.

Selon une autre variante, les fils de transmission du bus précités sont remplacés par des sous-ensembles de fils de transmission parallèles, chaque sous-ensemble comprenant un nombre prédéterminé de fils de transmission. Pour cette variante, un moyen d'accès est de préférence relié à des lignes de voies multiplexées entrantes et sortantes. Le moyen d'accès peut alors comprendre,

une table d'allocation de préférence programmable, pour faire correspondre à chaque voie entrante un fil de transmission dans le sous-ensemble de fils auquel est relié en émetteur le moyen d'accès et au moins un intervalle de temps dans un signal multiplex transmis dans ledit fil de transmission,

des moyens d'aiguillage reliés en entrée respectivement aux lignes de voies multiplexées entrantes,

et des moyens de multiplexage reliées en sortie respectivement aux fils du sous-ensemble auquel est relié le moyen d'accès,

chaque voie entrante étant aiguillée dans le moyen d'aiguillage respectif vers l'un des moyens de multiplexage sélectionné par ladite table, et au moins un intervalle de temps dans le signal multiplex dans le fil dudit sous-ensemble relié en sortie audit moyen de multiplexage sélectionné étant alloué à ladite voie entrante par ladite table.

Selon un autre aspect de l'invention, un moyen d'accès comprend un moyen de multiplexage pour multiplexer des voies numériques entrant dans le moyen d'accès en au moins un signal multiplex émis dans le fil de transmission relié en émission au moyen d'accès, et une table d'allocation, de préférence du type mémoire programmable pour faire correspondre aux voies entrantes respectivement des intervalles de temps dans le signal multiplex. En pratique, les signaux multiplex dans l'ensemble de fils ont des débits égaux.

Un moyen d'accès peut comprendre au moins un moyen sélecteur en réception au bus pour sélectionner des intervalles de temps des signaux multiplex transmis dans les fils de transmission de données du bus afin de constituer un signal multiplex d'intervalles sélectionnés et des moyens pour démultiplexer le signal multiplex d'intervalles de temps en des voies numériques sortant du moyen d'accès. Les données contenues dans les intervalles de temps sélectionnés par le moyen sélecteur sont transmises vers les accès en sortie au fur et à mesure où elles se présentent en réception du circuit d'accès. Il n'y a pas de réorganisation temporelle des données. Ce circuit d'accès effectue du multiplexage-démultiplexage, sans brassage temporel.

En variante, un moyen d'accès comprend un moyen de multiplexage relié en réception au bus pour multiplexer les signaux multiplex transmis dans les fils de transmission en un signal supermultiplex, un moyen sélecteur pour sélectionner des intervalles de temps dans le signal supermultiplex, une table de connexion pour faire correspondre des voies numériques sortant du moyen d'accès aux intervalles de temps sélectionnés dans le signal supermultiplex, et un moyen de brassage pour mémoriser des intervalles de temps sélectionnés dans le signal supermultiplex et diriger les intervalles de temps mémorisés vers les voies numériques sortantes.

Le moyen de brassage brasse les données seulement pour les accès de voie reliés au moyen d'accès incluant le moyen de brassage ; le débit de brassage est donc adapté à ces accès, et est inférieur au débit total du multiplexeur.

D'autres caractéristiques et avantages de la présente invention apparaîtront plus clairement à la lecture de la description suivante de plusieurs réalisations préférées de l'invention, en référence aux dessins annexés correspondants dans lesquels :

- la figure 1 représente un réseau de transmission connu ;
- la figure 2 est un bloc-diagramme d'une première réalisation d'un multiplexeur selon l'invention ;
- la figure 3 est bloc-diagramme d'une seconde réalisation d'un multiplexeur selon l'invention ;
- la figure 4 est un bloc-diagramme d'une première réalisation d'un moyen d'accès ;
- la figure 5 représente un signal sur un fil de transmission dans un multiplexeur selon l'invention ;
- la figure 6 est un bloc-diagramme d'une seconde réalisation d'un moyen d'accès ; et
- la figure 7 est un bloc-diagramme fonctionnel d'une troisième réalisation d'un moyen d'accès.

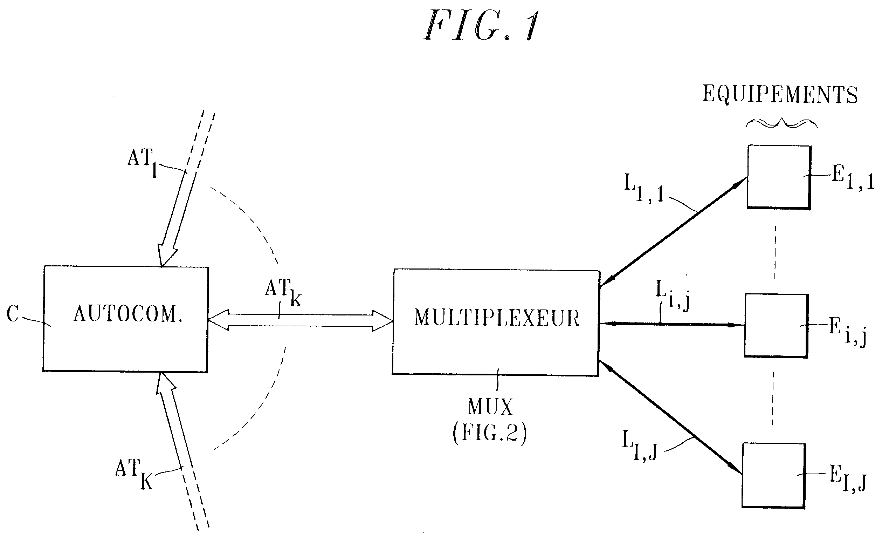

En référence à la **figure 1**, un **réseau de transmission** comprend un autocommutateur C reliant entr'elles K artères de transmission bidirectionnelles $AT_1$ à $AT_K$ dont trois $AT_1$, $AT_k$ et $AT_K$ sont représentées, k étant un indice entier compris entre 1 et l'entier K. L'artère $AT_k$ relie l'autocommutateur C à un multiplexeur MUX, dont le rôle est de multiplexer des données transmises par IxJ lignes de transmission $L_{1,1}$ à $L_{I,J}$ pour les transmettre vers l'artère $AT_K$. Chacune des lignes $L_{1,1}$ à $L_{I,J}$ est constituée de deux lignes simples monodirectionnelles ayant a priori des bas débits identiques. Seulement trois lignes $L_{1,1}$, $L_{I,J}$ et $L_{I,J}$ sont représentées à la figure 1, i et j étant des indices entiers respectivement compris entre 1 et les entiers I et J. Inversement, le multiplexeur-démultiplexeur distribue les données reçues d'au moins une artère $AT_k$ vers les lignes $L_{1,1}$ à $L_{I,J}$.

Les lignes de transmission $L_{1,1}$ à $L_{I,J}$ relient respectivement le multiplexeur MUX à des équipements $E_{1,1}$ à $E_{I,J}$ qui sont soit des équipements d'extrémité, tels que poste téléphonique ou terminal de transmission de données, soit des équipements ou des installations plus complexes tels qu'autocommutateur privé ou interface de réseau local. En variante, un équipement $E_{i,j}$ est un circuit de traitement interne au multiplexeur et effectue par exemple des opérations de concentration de données pour de la diffusion ou des liaisons de type conférence. La ligne $L_{i,j}$ relie le multiplexeur MUX à l'équipement $E_{i,j}$ qui est "rebouclé" sur le multiplexeur MUX par la ligne $L_{i,j}$.

Une ligne de transmission $L_{i,j}$ constitue un accès affluent pour le multiplexeur. Une telle ligne supporte des données à bas débit, typiquement sensiblement inférieur à 2 Mbit/s, et les lignes ont a priori des débits différents entre elles.

Une artère de transmission $AT_k$ constitue un accès résultant pour le multiplexeur. L'artère est à haut débit, typiquement supérieur ou égal à 2 Mbit/s.

Les lignes et artères de transmission sont des supports de voies numériques, ou des lignes analogiques qui sont numérisées en entrée du multiplexeur. D'une manière générale, elles transmettent la voix et des données entre les différents éléments d'un réseau de transmission, qui peut être un réseau commuté ou un réseau de liaisons spécialisées. La gamme des débits de lignes connectables est étendue et comprend à titre d'exemple des débits de 1200 bit/s, 8, 16, 32 et 64 kbit/s, et 2 Mbit/s pour les bas débits, et 34, 140 et 155 Mbit/s pour les hauts débits.

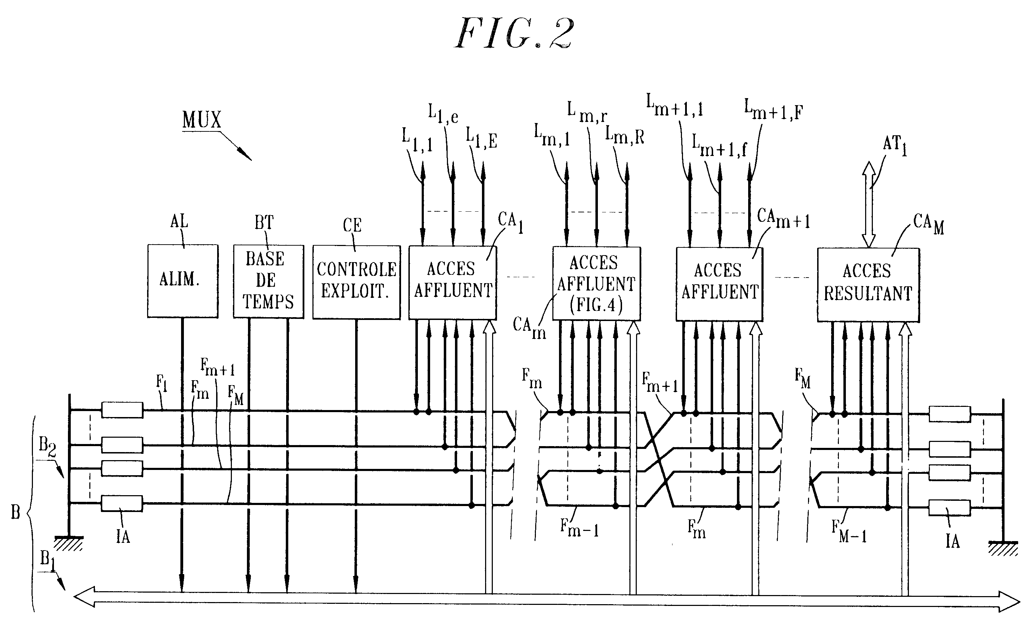

La **figure 2** représente schématiquement une première réalisation d'un **multiplexeur MUX** selon l'invention. Le multiplexeur MUX comprend plusieurs circuits d'accès résultant et affluent $CA_1$ à $CA_M$, un circuit d'alimentation AL, une base de temps BT et un circuit de contrôle d'exploitation CE. Ces différents circuits sont connectés les uns aux autres par un moyen de liaison B.

Afin d'alléger la figure, seuls quatre circuits d'accès $CA_1$, $CA_m$, $CA_{m+1}$, $CA_M$ sont représentés, où l'indice entier m est compris entre 1 et l'entier M supérieur à deux. Par exemple le nombre M de circuits d'accès connectables est égal à 16. Les différents circuits d'accès $CA_1$ à $CA_M$ sont connectés vers l'extérieur du multiplexeur à des lignes et à des artères de transmission comme représenté à la figure 1. A titre d'exemple, les circuits d'accès $CA_1$, $CA_m$, $CA_{m+1}$ sont connectés à des lignes bidirectionnels $L_{1,1}$ à $L_{1,E}$, $L_{m,1}$ à $L_{m,R}$, $L_{m+1,1}$ à $_{m+1,F}$ respectivement où E, R et F sont des entiers positifs et le circuit d'accès $CA_M$ est connecté à une artère de transmission bidirectionnelle $AT_1$.

En pratique, le multiplexeur MUX est réalisé sous la forme d'un châssis de dimensions normalisées destiné à être inséré dans une baie électronique. Le moyen de liaison B est un bus distribué à accès multiple, sous la forme d'une nappe de fils disposée en fond de panier du châssis. Le circuit d'alimentation, la base de temps, le circuit de contrôle d'exploitation et les circuits d'accès sont réalisés sous forme de cartes électroniques qui, lorsqu'elles sont placées dans des alvéoles du châssis du multiplexeur, sont connectées entr'elles par le bus de fond de panier.

Le bus B comprend un premier ensemble de fils conducteurs $B_1$ reliant la base de temps BT, le circuit d'alimentation AL et le circuit de contrôle d'exploitation CE aux circuits d'accès $CA_1$ à $CA_M$. Ce premier ensemble $B_1$ est un bus connu en soi.

Le circuit d'alimentation AL fournit, via le bus $B_1$, l'alimentation électrique nécessaire à chacun des autres circuits. Le circuit AL délivre par exemple une tension de -48 V, et chacun des autres circuits alimentés par cette tension comprend un convertisseur continu-continu, non représenté, afin de générer les différentes tensions nécessaires au fonctionnement du circuit. De préférence, le circuit d'alimentation est sécurisé, par exemple en mettant en parallèle deux circuits d'alimentation identiques, chacun étant conçu pour alimenter seul l'ensemble du multiplexeur en cas de défaillance de l'autre circuit d'alimentation.

La base de temps BT fournit l'horloge interne et la synchronisation de trame, dont le rôle sera expliqué dans la suite, à tous les circuits d'accès $CA_m$,

avec $1 \leq m \leq M$. La fréquence de l'horloge interne est par exemple 38 864 kHz, soit 18 x 2048 kHz, et la période de synchronisation de trame est 125 μs. La base de temps est de préférence sécurisée, par exemple en la doublant avec une base de temps de secours.

Le circuit de contrôle d'exploitation CE assure des fonctions d'exploitation du multiplexeur connues en soi, telles que par exemple maintenance et surveillance du bon fonctionnement des différents circuits compris dans le multiplexeur, et interface homme/machine. Le circuit CE assure également des fonctions de configuration du multiplexeur, notamment grâce aux tables d'allocation et de connexion comme détaillé dans la suite.

Le bus B comprend un second ensemble de fils conducteurs $B_2$ reliant entre eux tous les circuits d'accès $CA_1$ à $CA_M$ pour transmettre bidirectionnellement les données entre ces circuits. L'ensemble $B_2$ comprend M fils de transmission de données $F_1$ à $F_M$, dont quatre $F_1$, $F_m$, $F_{m+1}$ et $F_M$ sont représentés à la figure 2.

A un fil de transmission de données $F_m$ est associé un unique circuit d'accès $CA_m$ qui est maître de ce fil. Le terme "maître" signifie que seul le circuit d'accès $CA_m$ émet des données sur le fil $F_m$, à destination d'un ou de plusieurs autres circuits d'accès. Tous les circuits d'accès $CA_1$ à $CA_M$ sont connectés en réception au fil de transmission $F_m$. En variante, le circuit d'accès $CA_m$ n'est pas connecté en réception au fil $F_m$ et seulement tous les autres circuits d'accès sont reliés en réception au fil de transmission $F_m$.

Pour des liaisons série telles que représentées à la figure 2, le circuit d'accès $CA_m$ émet des données sur un seul fil $F_m$ du bus, et reçoit des données depuis tous les fils $F_1$ à $F_M$ du second ensemble de fils $B_2$ du bus. Dans ce cas, le nombre de fils dans le second ensemble $B_2$ est égal au nombre maximal de circuits d'accès connectables dans le multiplexeur, et en conséquence au nombre d'alvéoles disponibles dans le châssis pour les circuits d'accès. A titre d'exemple, le nombre de fils de transmission de données de l'ensemble $B_2$ est 16.

En cas de défaillance de l'un des circuits d'accès, seules les liaisons transitant à travers ce circuit d'accès sont perturbées. Par exemple, si le circuit d'accès $CA_m$ n'est plus alimenté en tension, il ne peut plus ni émettre des données vers les autres circuits d'accès, ni en recevoir. En revanche, les liaisons entre les autres circuits d'accès ne sont pas affectées par cette défaillance. La défaillance du circuit $CA_m$ crée donc une perturbation limitée qui ne se propage pas dans le multiplexeur. Le bus B comprenant un ensemble $B_2$ de fils de transmission chacun associé en émission à un seul circuit d'accès maître est ainsi un bus robuste.

En variante, la sécurisation est améliorée en sécurisant les circuits d'accès par doublement dit "1 + 1" ; ce doublement consiste pour chaque circuit d'accès, ou un certain nombre d'entre eux, à mettre en parallèle le circuit d'accès et un circuit d'accès de secours identique, et à basculer la transmission vers le circuit de secours lorsqu'une défaillance est constatée. Selon une autre variante, les circuits d'accès sont sécurisés par redondance dite "1 + N" ; à un groupe de N circuits d'accès identiques est associé un circuit d'accès de secours, et la transmission d'un circuit d'accès du groupe est basculée vers le circuit de secours lorsqu'une défaillance dudit circuit d'accès est constatée.

De préférence, la nappe de fil constituant l'ensemble $B_2$ de fils de transmission de données n'est pas une nappe plane, mais présente une permutation spatiale. Dans le cas d'un multiplexeur MUX comprenant des circuits d'accès émettant chacun dans un seul fil de transmission, tel que représenté à la figure 2, la permutation spatiale est de un fil de transmission de données par circuit d'accès. En regard d'un circuit d'accès $CA_m$, la position du fil de transmission $F_m$ associé en émission au circuit d'accès $CA_m$ est fixe dans la nappe de fils, quel que soit l'indice m compris entre 1 et M; ainsi les positions des fils $F_1$ à $F_M$ sont identiques respectivement en regard des circuits d'accès $CA_1$ à $CA_M$. Entre deux circuits d'accès adjacents $CA_m$ et $CA_{m+1}$, le fil $F_1$ prend la place du film $F_M$, le fil $F_m$ prend la place du fil $F_{m-1}$, et le fil $F_{m+1}$ prend la place du fil $F_m$ ; de manière générale tout fil $F_k$ avec $1 \leq k \leq M$ prend la place du fil $F_{k'}$, k et k' étant liés par la relation :

$$k = k' + 1 \text{ modulo } M.$$

La permutation est telle qu'un fil de transmission $F_m$ est une seule fois en position pour être raccordé en émission à un circuit d'accès $CM_m$.

Ainsi, les emplacements de circuits d'accès du multiplexeur MUX, dits alvéoles, sont banalisés, c'est-à-dire identiques et susceptibles de recevoir un quelconque circuit d'accès. Les circuits d'accès $CA_m$ et $CA_{m+1}$ peuvent par exemple être échangés ; le circuit d'accès $CA_m$ est alors émetteur dans le fil de transmission $F_{m+1}$, et le circuit d'accès $CA_{m+1}$ émet dans le fil $F_m$. Des circuits d'accès peuvent être retirés ou ajoutés, dans la limite du nombre maximal de circuits d'accès connectables, sans aucune modification du câblage interne du multiplexeur.

D'autre part, chaque fil de transmission $F_1$ à $F_M$ comprend à chacune de ses deux extrémités une impédance d'adaptation et de terminaison IA, afin d'éviter aux extrémités toutes réflexions perturbatrices nuisibles à une transmission de données.

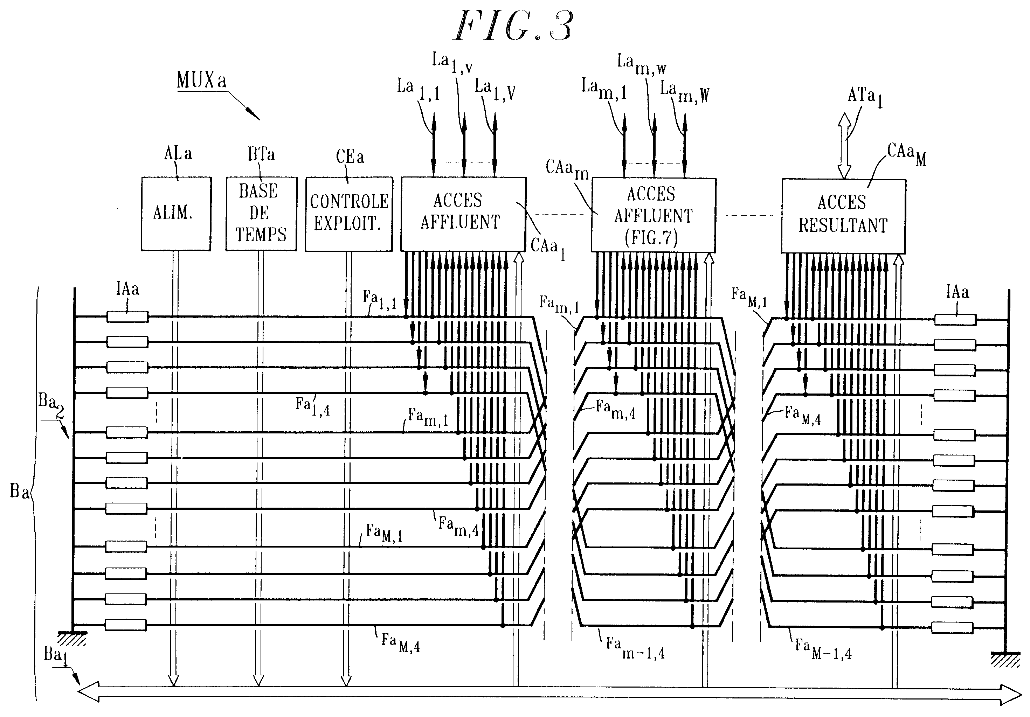

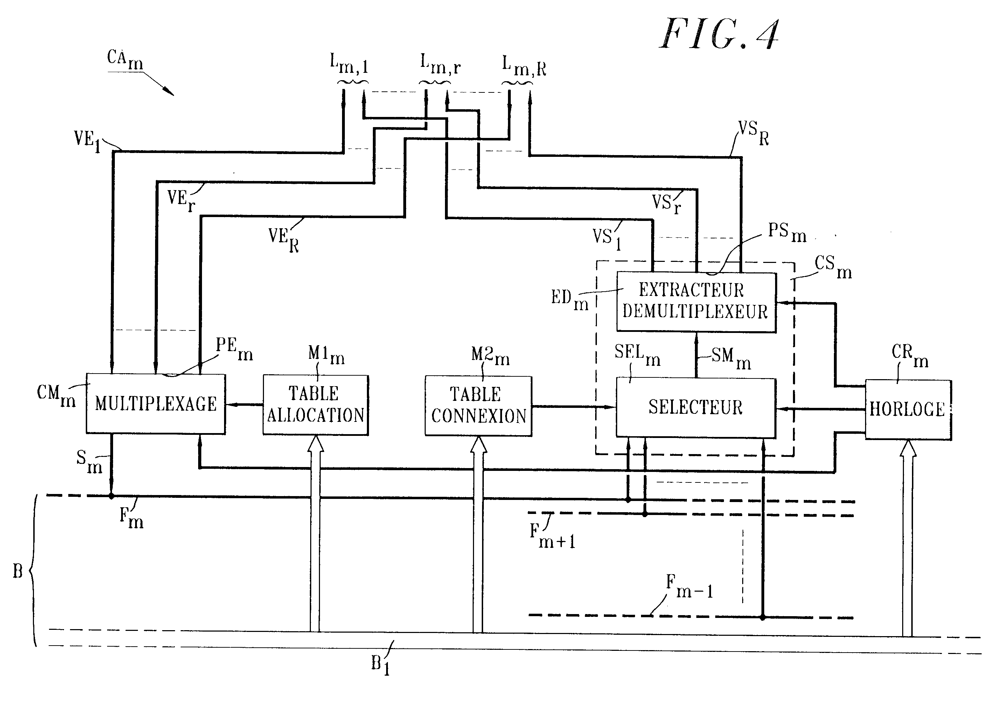

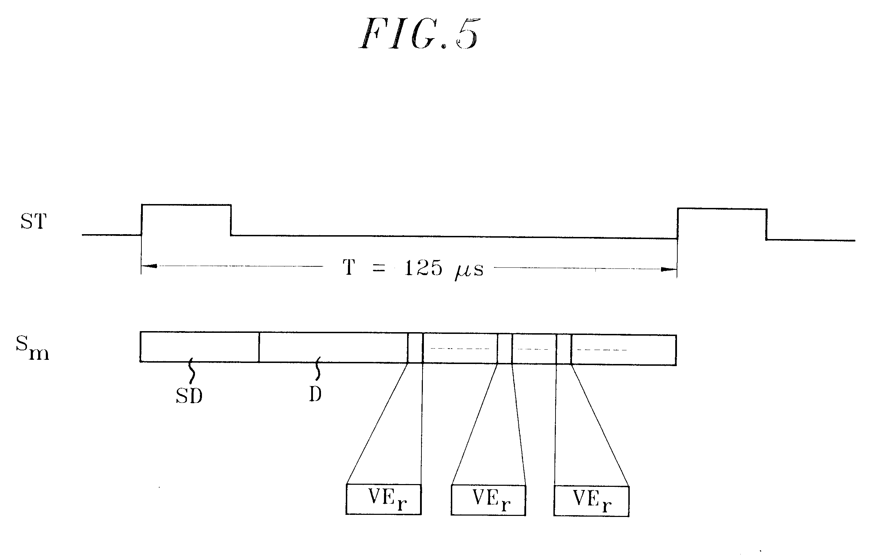

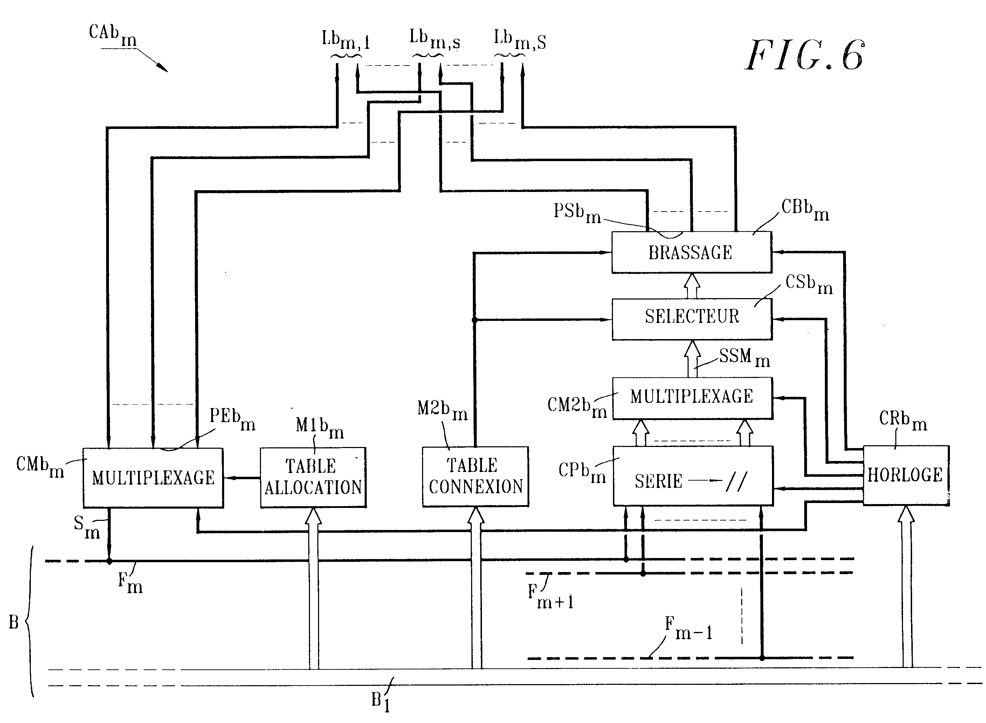

La **figure 3** représente une seconde réalisation d'un **multiplexeur MUXa** selon l'invention, dont les différences par rapport au multiplexeur MUX sont exposées ci-après.

Le multiplexeur MUXa comprend une base de temps BTa, un circuit d'alimentation ALa, et un circuit de contrôle d'exploitation CEa, dont les fonctions sont respectivement analogues à celles des circuits BT, AL et CE dans le multiplexeur MUX.

Le multiplexeur MUXa comprend un moyen de liaison Ba, sous la forme d'un bus. Un premier ensemble $Ba_1$ de fils du bus Ba relie la base de temps BTa, le circuit d'alimentation ALa et le circuit de contrôle d'exploitation CEa à des circuits d'accès $CAa_1$ à $CAa_M$, où M est un entier positif.

Le bus Ba comprend un second ensemble de fils $Ba_2$ pour la transmission de données entre les circuits d'accès $CAa_1$ à $CAa_M$. L'ensemble $Ba_2$ comprend des fils de transmission de données $Fa_{1,1}$ à $Fa_{M,P}$ ayant chacun à leurs extrémités une impédance d'adaptation et de terminaison IAa, où P est un entier positif. Afin d'alléger la figure 3, seulement trois circuits d'accès $CAa_1$, $CAa_m$ et $CAa_M$ et les fils de transmission correspondants sont représentés dans le multiplexeur MUXa. L'entier P vaut 4, et les fils de transmission associés en émission aux circuits d'accès $CAa_1$, $CAa_m$ et $CAa_M$ sont respectivement $Fa_{1,1}$ à $Fa_{1,4}$, $Fa_{m,1}$ à $Fa_{m,4}$ et $Fa_{M,1}$ à $Fa_{M,4}$.

Les circuits d'accès $CAa_1$ à $CAa_M$ sont reliés vers l'extérieur du multiplexeur à des lignes et des artères de transmission analogues à celles représentées à la figure 1 ; ainsi dans la figure 3, des lignes $La_{1,1}$ à $La_{1,V}$ et $La_{m,1}$ à $La_{m,W}$ et une artère $ATa_1$ sont terminés par les circuits d'accès $CAa_1$, $CAa_m$ et $CAa_M$.

Comme pour le multiplexeur MUX représenté à la figure 2, un fil de transmission de données $Fa_{m,p}$, avec $1 \leq m \leq M$ et $1 \leq p \leq P$, est associé en émission à un seul circuit d'accès maître. En revanche, un circuit d'accès $CAa_m$ émet en parallèle dans P fils de transmission respectifs $Fa_{m,1}$ à $Fa_{m,P}$. En variante, l'entier P a une valeur différente de 4, par exemple 2 ou 8.

Selon une autre variante, un circuit d'accès $CAa_m$ peut être remplacé par un circuit d'accès émettant en parallèle dans P1 fils de transmission parmi les P fils $Fa_{m,1}$ à $Fa_{m,P}$, avec P1 strictement inférieur à P. Un circuit $CA_m$ émettant dans un seul fil de transmission de bus et tel que décrit précédemment peut notamment être placé dans un multiplexeur MUXa.

Comme précédemment, la nappe des fils de transmission $Fa_{1,1}$ à $Fa_{M,P}$ n'est pas une nappe plane, mais présente une permutation spatiale. Pour une transmission parallèle dans P fils, le décalage spatial est de P fils de transmission par circuit d'accès. Les positions des P fils de transmission associés en émission aux circuits d'accès $CAa_1$ à $CAa_M$ sont identiques dans la nappe de fils respectivement en regard des circuits d'accès $CAa$ à $CA_M$. Entre deux circuits d'accès adjacents, les fils de transmission sont permutés de sorte que P autres fils de transmission sont associés en émission au circuit d'accès adjacent. La permutation est telle qu'un groupe de P fils de transmission est une seule fois en position pour être raccordé en émission à un circuit d'accès.

Grâce à la permutation spatiale des fils de transmission, tous les emplacements de connexion des circuits d'accès CAa$_1$ à CAa$_M$ au bus Ba sont identiques et sont susceptibles de recevoir un quelconque circuit d'accès CAa$_m$ ou CA$_m$.

En variante, un multiplexeur comprend un bus avec un ensemble de fils de transmission de données composé d'un premier sous-ensemble de fils de transmission analogues à ceux B$_2$ décrits en référence à la figure 2, et d'un second sous-ensemble de fils de transmission analogues à ceux Ba$_2$ décrits en référence à la figure 3. Le premier sous-ensemble de fils de transmission présente une permutation spatiale d'un fil par circuit d'accès et reçoit des données depuis des premiers circuits d'accès à transmission série pour les transmettre à tous les autres circuits d'accès. Le second sous-ensemble de fils de transmission présente une permutation spatiale de P fils par circuit d'accès, où P est un entier supérieur à 1, et reçoit des données depuis des seconds circuits d'accès à transmission parallèle sur P fils pour les transmettre à tous les autres circuits d'accès. Chacun des fils des premier et second sous-ensembles est raccordé à un seul circuit d'accès maître, ce qui sécurise le moyen de liaison comme exposé précédemment.

Les premiers circuits d'accès sont plus particulièrement destinés à des lignes de transmission à bas débit et les seconds circuits à des artères à haut débit. A titre d'exemple, un multiplexeur comprend un premier sous-ensemble de seize fils de transmission auxquels sont connectables au maximum seize circuits d'accès à transmission série, et un second sous-ensemble de seize fils de transmission auxquels sont connectables au maximum quatre circuits d'accès à transmission parallèle sur quatre fils.

En référence à la **figure 4**, R lignes entrantes et sortantes L$_{m,1}$ à L$_{m,R}$ sont appliquées à des ports entrant et sortant PE$_m$ et PS$_m$ du **circuit d'accès CA$_m$** selon une première réalisation. Le circuit d'accès CA$_m$ convient plus particulièrement à des lignes de transmission à bas débit portant respectivement une voie numérique entrante VE$_1$ à VE$_R$ et une voie numérique sortante VS$_1$ à VS$_R$ ; le circuit d'accès CA$_m$ est connecté au bus B tel que décrit en référence à la figure 2 et partiellement représenté à la figure 4.

Les voies numériques entrantes VE$_1$ à VE$_R$ appliquées en parallèle au port entrant PE$_m$ sont plésiochrones et multiplexées par octet dans un circuit de multiplexage CM$_m$ qui émet un signal de multiplexage Sm dans le fil de transmission F$_m$ du bus B. Le débit et la durée de trame du signal S$_m$ sont prédéterminés et identiques pour tous les signaux émis dans les fils de transmission F$_1$ à F$_M$ du bus.

A titre d'exemple, comme illustré à la figure 5, un signal S$_m$ dans un fil de transmission est transmis à un débit de 9,216 Mbit/s. Une trame a une durée de T = 125 μs et contient 144 intervalles de temps, dont 128 sont occupés par des octets de données D et 16 constituent des intervalles de temps de sur-débit SD.

Le débit ainsi supporté par un fil de transmission relativement auxdits 128 intervalles de temps de données est de 8,192 Mbit/s, ce qui correspond au multiplexage de quatre voies MIC à 2,048 Mbit/s ayant chacune une trame de 128/4 = 32 intervalles de temps. Le "sur-débit" inclus dans les 16 intervalles de temps de sur-débit contient des informations liées au multiplexage des voies à 2,048 Mbit/s, telles que bits d'indication de justification, et liées à la synchronisation de trame, telles que mot d'alignement de trame.

Un circuit de génération d'horloge et de synchronisation de trame CR$_m$ récupère un signal de synchronisation de trame ST (figure 5) transmis par la base de temps BT dans le bus B1 (figure 2), et synchronise le signal S$_m$.

Le multiplexage des voies entrantes est réalisé en fonction d'une table d'allocation d'intervalle de temps aux voies entrantes, mémorisée dans une mémoire M1$_m$. La table d'allocation est transmise à la mémoire M1$_m$ par le circuit de contrôle d'exploitation CE, via le bus B$_1$. La table d'allocation établit une correspondance entre une adresse pour chaque voie entrante et le rang d'un ou de plusieurs intervalles de temps de données qui sont alloués à la voie entrante. Cette correspondance une fois définie dans la table d'allocation est fixe. A titre d'exemple, comme représenté à la figure 5, trois intervalles de temps adjacents ou non dans la trame du signal S$_m$ correspondent à une voie entrante VE$_r$ à 64 x 3 = 192 kbit/s avec $1 \leqq r \leqq R$. Les octets provenant de la voie entrante VE$_r$ sont systématiquement introduits dans ces intervalles de temps. Pour augmenter ou diminuer le débit alloué à la voie VE$_r$ à débit K$_r$ x 64 kbit/s selon l'exemple considéré, où K$_r$ est un entier positif inférieur ou égal à 32, l'opérateur augmente ou diminue le nombre d'intervalles de temps dans la trame du signal S$_m$ alloués à la voie VE$_r$, par modification de la table d'allocation via le circuit de contrôle d'accès.

Les octets dans chaque voie entrante VE$_1$ à VE$_R$ sont multiplexés en le signal S$_m$ et émis dans le fil F$_m$ au fur et à mesure où ils se présentent en entrée du multiplexeur MUX, sans réorganisation temporelle. La somme des débits des voies entrantes dans le circuit d'accès CA$_m$ est limitée par le débit du signal S$_m$ résultant du multiplexage. Par exemple, pour un signal S$_m$ de débit 9,216 Mbit/s dont 8,192 Mbit/s de données et 1,024 Mbit/s de sur-débit, la somme maximale des débits des voies entrantes est de 8,192 Mbit/s. Lorsque la somme des débits de voies entrantes à multiplexer est inférieur au débit de données du signal S$_m$, le circuit de multiplexage CM$_m$ introduit des bits ou des octets de bourrage dans les intervalles de temps inoccupés dans la trame du signal S$_m$.

En sortie, le circuit d'accès CA$_m$ comprend un circuit sélecteur CS$_m$ qui sélectionne dans les signaux S$_1$ à S$_M$ transmis dans tous les fils de transmission F$_1$ à F$_M$ les octets qui sont destinés aux voies numériques sortant du circuit d'accès CA$_m$, et démultiplexe

les octets sélectionnés pour les transmettre dans les voies sortantes destinataires à travers le port de sortie $PS_m$.

Comme déjà dit, le circuit d'accès $CA_m$ est connecté en réception à tous les fils de transmission $F_1$ à $F_M$ du bus B. Dans le circuit sélecteur $CS_m$, un sélecteur $SEL_m$ sélectionne de un à M signaux $S_i$, avec $1 \leq i \leq M$, transmis par les fils de transmission, pour les multiplexer en un signal $SM_m$ de débit multiple de celui des signaux $S_i$, par exemple $(4 \times 9,216) = 36,864$ Mbit/s si quatre signaux Si sont sélectionnés, et un circuit extracteur-démultiplexeur $ED_m$ démultiplexe par octet de voie le signal $SM_m$ afin d'extraire les octets de voie destinataire et les transmettre dans les voies sortantes du circuit d'accès $CA_m$. Dans le cas où un seul signal $S_i$ est sélectionné, le signal $SM_m$ est simplement identique au signal $S_i$.

En variante, le circuit sélecteur $SEL_m$ et le circuit extracteur-démultiplexeur $ED_m$ sont respectivement remplacés par R circuits sélecteurs parallèles et chacun connecté en réception aux fils de transmission $F_1$ à $F_m$ du bus B, et par R circuits extracteurs-démultiplexeurs parallèles et chacun respectivement relié à un circuit sélecteur et une à voie sortante.

La sélection des signaux $S_i$, avec $1 \leq i \leq M$, puis la sélection des octets sont réalisées suivant une table de connexion mémorisée en mémoire $M2_m$. La table de connexion est transmise à la mémoire $M2_m$ par le circuit de contrôle d'exploitation CE, via le bus B1. Pour les signaux sortants, la table de connexion fait correspondre à des adresses de lecture égales aux rangs d'intervalles de temps dans les trames des signaux $S_i$ et donc dans une "super-trame" du signal multiplex $SM_m$, l'adresse mémorisée d'une voie sortante $VS_r$, avec $1 \leq r \leq R$. Cette correspondance entre des intervalles de temps des signaux $S_i$ et la voie sortante $VS_r$ est fixe, ou pour le moins programmable par un opérateur ; ainsi les octets présents dans ces intervalles de temps sont systématiquement transmis à la voie $VS_r$.

Les octets transmis par les fils de transmission et sélectionnés par le circuit d'accès $CA_m$ sont transmis vers la voie $VS_r$ dans l'ordre où ils se présentent en réception du circuit d'accès ; il n'y a pas de réorganisation temporelle des octets.

En référence à la **figure 6**, une deuxième réalisation de **circuit d'accès CAb_m** est plus particulièrement destinée à des voies d'accès multiplexées nécessitant un brassage de données. Des lignes bidirectionnelles $Lb_{m,1}$ à $Lb_{m,S}$ sont des lignes multiplexées de voies entrantes et sortantes. Les lignes sont appliquées à des ports entrant et sortant $PEb_m$ et $PSb_m$ du circuit d'accès $CAb_m$.

Le circuit d'accès $CAb_m$ est d'autre part connecté à un bus B tel que décrit en référence à la figure 2 et partiellement représenté à la figure 6.

Les voies entrantes sont multiplexées puis émises dans le fil de transmission $F_m$ de manière analogue aux opérations déjà décrites pour le circuit d'accès $CA_m$ ; le circuit d'accès $CAb_m$ comprend un circuit de multiplexage $CMb_m$ analogue au circuit $CM_m$ décrit en référence à la figure 4. Les voies entrantes sont multiplexées par octet en un signal multiplex $S_m$ de débit et durée de trame prédéfinis, et le signal $S_m$ est émis dans le fil de transmission $F_m$ associé en émission au circuit d'accès $CAb_m$. Le multiplexage des voies entrantes est réalisé en fonction d'une table d'allocation mémorisée dans une mémoire $M1b_m$, et transmise par le circuit de contrôle d'exploitation CE via le bus $B_1$. La table d'allocation établit une correspondance entre chaque voie entrante, repérée par la position temporelle qu'elle occupe dans le signal multiplexé d'une ligne entrante, et le rang d'un ou de plusieurs intervalles de temps de la trame du signal $S_m$ qui sont alloués à la voie entrante. Le nombre d'intervalles de temps ainsi alloués à une voie est déterminé par le débit de la voie.

Les voies sortantes sont traitées différemment de celles selon la réalisation illustrée à la figure 4. Le circuit d'accès $CAb_m$ reçoit tous les signaux transmis dans les fils de transmission $F_1$ à $F_M$, sélectionne et mémorise les octets qui lui sont destinés, puis effectue un brassage temporel de ces octets avant de les transmettre aux voies sortantes. Le brassage temporel des octets reconstitue les voies sortantes multiplexées dans chaque ligne $Lb_{m,1}$ à $Lb_{m,s}$.

Le circuit d'accès CAbm est connecté en réception à tous les fils de transmission $F_1$ à $F_M$ du bus. Un circuit de conversion série-parallèle $CPb_m$ convertit les octets des signaux $S_1$ à $S_M$ reçus en série, en des octets parallèles dans un bus à 8 x M fils. Les octets parallèles sont appliqués à un circuit de multiplexage $CM2b_m$ qui les multiplexe en un signal "supermultiplex" $SSM_m$ et les transmet en série à un circuit sélecteur $CSb_m$ qui reçoit ainsi toutes les données transmises dans les fils de transmission $F_1$ à $F_M$ du bus B et qui sélectionne des octets avant de les transmettre à un circuit de brassage $CBb_m$ essentiellement composé de mémoires. L'ensemble du traitement est effectué "super-trame" par "super-trame" du signal $SSM_m$ et est synchronisé par le signal de synchronisation ST transmis par la base de temps BT et récupéré par un circuit de génération d'horloge et de base de temps $CRb_m$.

Le circuit de contrôle d'exploitation CE fournit à une mémoire $M2b_m$ une table de connexion faisant correspondre, en tant qu'adresse de lecture, les rangs des intervalles de temps occupés par les octets dans la "super-trame" du signal $SSM_m$ avec des adresses mémorisées des voies de sortie destinataires. Ainsi, à un intervalle de temps correspond une voie sortante multiplexée avec d'autres voies sortantes dans une ligne $Lb_{m,1}$ à $Lb_{m,S}$. Pour introduire les données dans la voie sortante destinataire, il est nécessaire de sélectionner puis de brasser les données. La mémoire $M2b_m$ fournit au circuit sélecteur $CSb_m$

des bits de validation, en fonction de la table de connexion et en synchronisme avec les octets dans le signal $SSM_m$ transmis par le circuit de multiplexage $CM2b_m$. Par exemple, la mémoire $M2b_m$ fournit un bit de validation par octet transmis ; si le bit de validation est à "1", l'octet associé est sélectionné puis transmis au circuit de brassage $CBb_m$ qui mémorise alors l'octet. Si le bit de validation est à "0", l'octet associé n'est pas transmis et donc non mémorisé. Les bits de validation permettent ainsi de sélectionner les octets à mémoriser qui seront effectivement brassés par le circuit de brassage. Le circuit de brassage $CBb_m$ ne mémorise donc que les octets qui lui sont destinés, pendant une "super-trame" ce qui limite la capacité des mémoires nécessaires. Le circuit de brassage réorganise temporellement, puis dirige et émet ces octets vers les voies sortantes pendant la "super-trame" suivante grâce à la table de connexion.

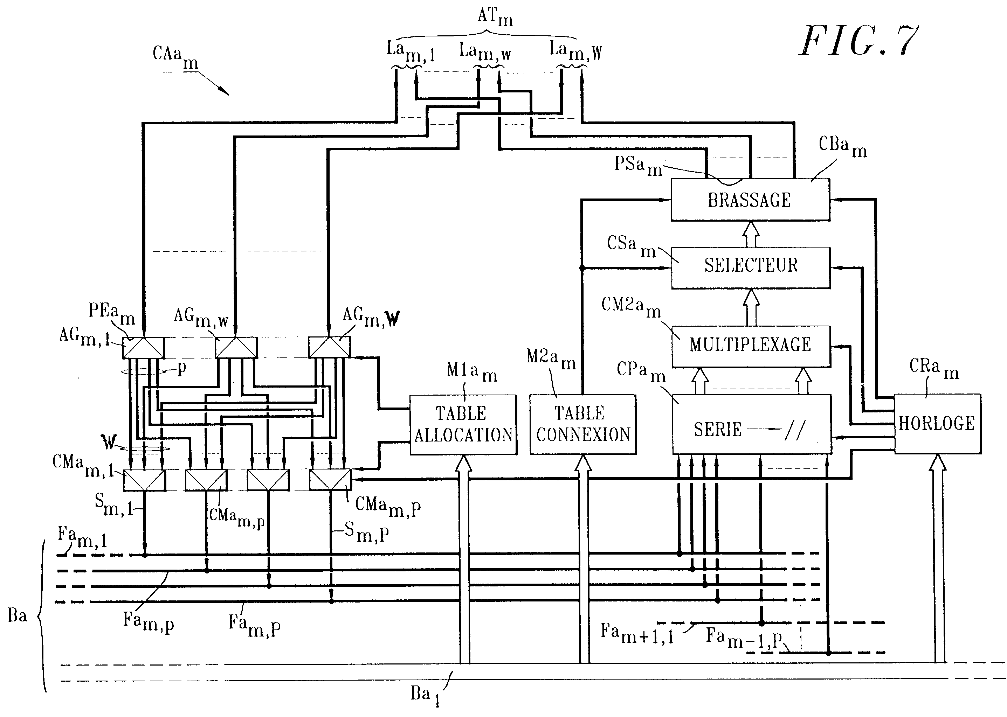

En référence à la **figure 7**, une troisième réalisation de **circuit d'accès $CAa_m$** est plus particulièrement destiné à un bus Ba tel que décrit en référence à la figure 3 et partiellement représenté à la figure 7. Le circuit $CAa_m$ est connecté par des ports d'entrée et de sortie $PEa_m$ et $PSa_m$ à des lignes d'accès bidirectionnelles $La_{m,1}$ à $La_{m,W}$ formant par exemple une artère $AT_m$ à haut débit. Chaque ligne $La_{m,w}$ avec $1 \leq w \leq W$ convoie des voies entrantes multiplexées et des voies sortantes multiplexées en nombre élevé.

Les signaux entrants dans le circuit d'accès $CAa_m$ sont mis en forme et émis sur P fils de transmission $Fa_{m,1}$ à $Fa_{m,P}$ associés en émission au circuit d'accès $CAa_m$. Le nombre P de fils de transmission associés est déterminé par le débit de l'artère $AT_m$. Par exemple, pour une artère à 34 Mbit/s ayant W = 16 lignes numériques à 2,048 Mbit/s, qui supportent chacune 32 voies numériques multiplexées octet par octet à 64 kbit/s et pour des signaux multiplex $S_{m,1}$ à $S_{m,P}$ ayant chacun un débit utile de 8,192 Mbit/s dans les fils de transmission associés en émission au circuit d'accès $CAa_m$, quatre fils de transmission sont nécessaires.

Les voies multiplexées convoyées dans chaque lignes $La_{m,1}$ à $La_{m,W}$ de l'artère résultante $AT_m$ sont tout d'abord aiguillées par un circuit d'aiguillage $AG_{m,1}$ à $AG_{m,W}$ à P sorties multiplex vers P circuits de multiplexage $CMa_{m,1}$ à $CMa_{m,P}$. Chacun des circuits de multiplexage multiplexe octet par octet les voies qui ont été aiguillées vers celui-ci en les signaux multiplex $S_{m,1}$ à $S_{m,P}$ qui sont émis dans les P fils de transmission $Fa_{m,1}$ à $Fa_{m,P}$ du bus. Ainsi, W entrées du circuit de multiplexage $CMa_{m,p}$ sont reliées à des sorties respectives des circuits d'aiguillage par des liaisons à 2,048 Mbit/s selon l'exemple précité. Comme précédemment, le débit et la durée de trame des signaux $S_{m,1}$ à $S_{m,P}$ sont prédéterminés et identiques sur tous les fils de transmission du bus et sont par exemple égaux à ceux illustrés à la figure 5. Les signaux $S_{m,1}$ à $S_{m,P}$ sont synchronisés par un circuit de génération d'horloge et de synchronisation de trame $CRa_m$, grâce au signal de synchronisation de trame ST émis par la base de temps BTa sur le bus $Ba_1$.

L'aiguillage des voies entrantes par les circuits $AG_{m,1}$ à $AG_{m,W}$, puis le multiplexage des voies aiguillées par les circuits $CMa_{m,1}$ à $CMa_{m,P}$ sont réalisés suivant une table d'allocation mémorisée dans une mémoire $M1a_m$. Cette table d'allocation contient pour chaque voie entrante, au moins une première adresse de fils destinataires parmi les P fils $Fa_{m,1}$ à $Fa_{m,P}$ de manière à sélectionner au moins l'une des sorties du circuit de démultiplexage correspondant $AG_{m,1}$ à $AG_{m,W}$, et au moins une seconde adresse de manière à sélectionner au moins un intervalle temporel dans la trame du signal multiplex dans le fil destinataire. Il est à noter qu'une voie entrante peut être répartie dans plusieurs intervalles temporels de plusieurs signaux de fil destinataire $S_{m,1}$ à $S_{m,P}$. Comme précédemment, la table d'allocation est transmise à la mémoire $M1a_m$ par le circuit de contrôle d'exploitation CEa, via le bus $Ba_1$.

Les octets des voies entrantes sont aiguillés puis multiplexés pour être émis dans les fils du bus suivant l'ordre où ils parviennent au circuit d'accès $CAa_m$, sans réorganisation temporelle.

En sortie, le circuit d'accès $CAa_m$ réalise une fonction consistant globalement à recevoir les signaux transmis par le bus, mémoriser les octets destinés aux voies sortantes de l'accès $AT_m$, et les brasser pour les transmettre aux voies sortantes. Les circuits remplissant ces fonctions dans le circuit $CAa_m$ sont analogues à ceux décrits en référence à la figure 6 et sont un circuit de conversion série-parallèle $CPa_m$ qui reçoit et parallélise tous les octets transmis en série dans les fils de transmission de données $Fa_{k,p}$, avec $1 \leq k \leq M$ et $1 \leq p \leq P$, puis les transmet à un circuit de multiplexage $CM2a_m$ qui multiplexe les octets à bits parallèles en série en un signal supermultiplex $SSM_m$ appliqué à un circuit sélecteur $CSb_m$ suivi d'un circuit de brassage $CBa_m$. Comme à la figure 6, le circuit de brassage CBam mémorise les octets sélectionnés et transmis par le circuit sélecteur $CSb_m$ pendant une période de "super-trame" du signal supermultiplex et ne brasse les octets mémorisés destinés aux voies de l'accès $AT_m$ que pendant la période de "super-trame" suivante. La sélection et le brassage des octets sont effectués au moyen de la table de connexion mémorisée dans une mémoire $M2a_m$ et transmise par le circuit de contrôle d'exploitation CEa via le bus B1.

L'ensemble du traitement est synchronisé par le circuit de génération d'horloge et de synchronisation de trame $CRa_m$.

En pratique, un multiplexeur comprend des circuits d'accès tels que le circuit $CA_m$ (figure 4) pour des accès à bas débit de voies numériques non multiplexées ne nécessitant pas de brassage des données, des circuits d'accès tels que le circuit $CAb_m$ (fi-

gure 6) pour des accès à bas débit de voies numériques multiplexées nécessitant un brassage des données, et des circuits d'accès tels que le circuit $CAa_m$ (figure 7) pour des accès à haut débit, avec brassage des données. Les circuits d'accès des deux premiers types sont reliés à un ensemble de fils de transmission tel que l'ensemble $B_2$ (figure 2) ou tel que l'ensemble $Ba_2$ (figure 3) et les circuits d'accès du troisième type sont reliés à un ensemble de fils de transmission tel que l'ensemble $Ba_2$.

Le multiplexeur selon l'invention permet la transmission point à point entre une voie entrante et une quelconque voie sortante, et une diffusion entre une voie entrante et plusieurs quelconques autres voies sortantes.

## Revendications

1 - Multiplexeur de voies numériques comprenant plus de deux moyens d'accès ($CA_m$, $CAa_m$, $CAb_m$) interconnectés par un moyen de liaison pour multiplexer et démultiplexer des voies numériques, caractérisé en ce que le moyen de liaison est un bus (B ; Ba) comprenant un ensemble ($B_2$ ; $Ba_2$) de fils de transmission de données ($F_m$ ; $Fa_{m,p}$) à chacun desquels sont reliés en émetteur un seul moyen d'accès ($CA_m$, $CAb_m$ ; $CAa_m$) et en récepteur tous les autres moyens d'accès.

2 - Multiplexeur de voies numériques conforme à la revendication 1, caractérisé en ce qu'à chacun des fils de transmission de données ($F_m$ ; $F_{m,p}$) est également relié en récepteur ledit seul moyen d'accès relié en émetteur ($CA_m$, $CAb_m$ ; $CAa_m$).

3 - Multiplexeur de voies numériques conforme à la revendication 1 ou 2, caractérisé en ce qu'une position de fil de transmission ($F_m$ ; $Fa_{m,p}$) dans le bus est associée à chaque moyen d'accès ($CA_m$, $CAb_m$ ; $CAa_m$), ledit chaque moyen d'accès étant relié en émetteur à un fil à la position associée, et en ce que l'ensemble ($B_2$ ; $Ba_2$) des fils de transmission de données du bus est permuté spatialement d'un fil entre deux moyens d'accès contigus et chaque fil de transmission de données est à la position associée en regard d'un moyen d'accès respectif.

4 - Multiplexeur de voies numériques conforme à l'une quelconque des revendications 1 à 3, caractérisé en ce qu'un moyen d'accès ($CA_m$, $CAb_m$) comprend un moyen de multiplexage ($CM_m$, $CMb_m$) pour multiplexer des voies numériques entrant dans le moyen d'accès en un signal multiplex ($S_m$) émis dans le fil de transmission ($F_m$) relié en émission au moyen d'accès, et une table d'allocation ($M1_m$, $M1b_m$), de préférence programmable, pour faire correspondre aux voies entrantes respectivement des intervalles de temps dans le signal multiplex ($S_m$).

5 - Multiplexeur de voies numériques conforme à la revendication 4, caractérisé en ce que le moyen d'accès ($CA_m$) comprend au moins un moyen sélecteur ($SEL_m$) pour sélectionner des intervalles de temps des signaux multiplex (S1 à $S_M$) transmis dans les fils de transmission ($F_1$ à $F_M$) reliés en réception au moyen d'accès afin de constituer un signal multiplex d'intervalles de temps sélectionnés ($SM_m$) et des moyens pour démultiplexer le signal multiplex d'intervalles de temps en des voies numériques ($VS_1$ à $VS_R$) sortant du moyen d'accès.

6. - Multiplexeur de voies numériques conforme à la revendication 4, caractérisé en ce qu'un moyen d'accès ($CAa_m$, $CAb_m$) comprend un moyen de multiplexage ($CPa_m$, $CM2a_m$ ; $CPb_m$, $CM2b_m$) pour multiplexer les signaux multiplex ($S_1$ à $S_M$) transmis dans les fils de transmission ($F_m$, $Fa_{m,p}$) reliés en réception au moyen d'accès, en un signal supermultiplex ($SSM_m$), un moyen sélecteur ($CSa_m$, $CSb_m$) pour sélectionner des intervalles de temps dans le signal supermultiplex, une table de connexion ($M2a_m$, $M2b_m$) de préférence programmable pour faire correspondre des voies numériques sortant du moyen d'accès aux intervalles de temps sélectionnés dans le signal supermultiplex, et un moyen de brassage ($CBa_m$, $CBb_m$) pour mémoriser les intervalles de temps sélectionnés dans le signal supermultiplex et diriger les intervalles de temps mémorisés vers les voies sortantes.

7. - Multiplexeur de voies numériques dans lequel les fils de transmission cités dans l'une quelconque des revendications 1 à 3 sont remplacés par des sous-ensembles de fils de transmission parallèles ($Fa_{m,1}$ - $Fa_{m,p}$), chaque sous-ensemble comprenant un nombre prédéterminé (P) de fils de transmission.

8. - Multiplexeur de voies numériques conforme à la revendication 7, caractérisé en ce qu'un moyen d'accès est relié à des lignes de voies multiplexées entrantes et sortantes ($La_{m,1}$ à $La_{m,W}$) et comprend

une table d'allocation ($M1a_m$), de préférence programmable, pour faire correspondre à chaque voie entrante un fil de transmission dans le sous-ensemble de fils ($Fa_{m,1}$ - $Fa_{m,P}$) auquel est relié en émetteur le moyen d'accès et au moins un intervalle de temps dans un signal multiplex transmis dans ledit fil de transmission,

des moyens d'aiguillage ($AG_{m,1}$ à $AG_{m,W}$) reliés en entrée respectivement aux lignes de voies multiplexées entrantes,

et des moyens de multiplexage ($CMa_{m,1}$ à $CMa_{m,P}$) reliées en sortie respectivement aux fils du sous-ensemble auquel est relié le moyen d'accès,

chaque voie entrante étant aiguillée dans le moyen d'aiguillage respectif vers l'un des moyens de multiplexage sélectionné par ladite table, et au moins un intervalle de temps dans le signal multiplex dans le fil dudit sous-ensemble relié en sortie audit moyen de multiplexage sélectionné étant alloué à ladite voie entrante par ladite table.

9. - Multiplexeur de voies numériques conforme à l'une quelconque des revendications 1 à 8, caractérisé en ce que chacun des fils de transmission de données ($F_m$ ; $Fa_{m,p}$) du bus comprend une impédance d'adaptation (IA, IAa) à chacune de ses extrémités.

# FIG.1

EQUIPEMENTS

AT$_1$

AT$_k$

AT$_K$

C — AUTOCOM.

MULTIPLEXEUR

MUX
(FIG.2)

L$_{1,1}$

L$_{i,j}$

I$_{I,J}$

E$_{1,1}$

E$_{i,j}$

E$_{I,J}$

EP 0 648 030 A1

*FIG.2*

# FIG.3

EP 0 648 030 A1

FIG.4

# FIG.5

ST

$$T = 125 \ \mu s$$

$S_m$

SD

D

VE$_r$    VE$_r$    VE$_r$

*FIG.6*

*FIG. 7*

Office européen
des brevets

**RAPPORT DE RECHERCHE EUROPEENNE**

Numero de la demande

EP 94 40 2029

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| P,X | WO-A-94 18766 (DSC COMMUNICATIONS CORP) * page 1, ligne 8 - ligne 34 * | 1,3,7,9 | H04J3/16 |
| P,A | * page 3, ligne 9 - page 4, ligne 37; figures 1-3,5 * | 2,4-6,8 | |
| | --- | | |
| X | GB-A-2 172 173 (SRX CORP.) * page 2, ligne 84 - page 3, ligne 14 * | 1 | |
| A | * page 3, ligne 45 - ligne 64 * * page 4, ligne 113 - ligne 121; figures 1,2 * | 3 | |
| | --- | | |
| A | US-A-4 016 369 (PEDERSEN) * colonne 1, ligne 67 - colonne 2, ligne 16 * * colonne 5, ligne 24 - ligne 41; figure 4 * | 1,3 | |
| | --- | | |
| A | NACHRICHTENTECHNISCHE BERICHTE, no.9, Avril 1992, BACKNANG DE pages 70 - 78, XP331860 H. SCHEFFLER 'Cross-Connect-System PCM30CC' * page 71, colonne de gauche, ligne 34 - colonne de droite, ligne 63; figures 2,3 * | 1,2,4-8 | |

DOMAINES TECHNIQUES RECHERCHES (Int.Cl.6)

H04J
G06F

Le présent rapport a été établi pour toutes les revendications

| Lieu de la recherche | Date d'achèvement de la recherche | Examinateur |
|---|---|---|
| LA HAYE | 29 Décembre 1994 | Pieper, T |

EPO FORM 1503 03.82 (P04C02)